# EUROPEAN PATENT SPECIFICATION

(11) **EP 4 334 254 B1**
(45) Date of publication and mention of the grant of the patent: **25.11.2026**
(21) Application number: 21946910.3
(22) Date of filing: 20.06.2021
(51) Int. Cl.: C02F 1/48, C02F 1/00

(54) **WATER DISINFECTANT PRODUCTION SYSTEM INCLUDING WATER MAGNETIZATION MODULE**
WASSERDESINFEKTIONSMITTEL-PRODUKTIONSSYSTEM EINSCHLIESSLICH WASSERMAGNETISIERUNGSMODUL
SYSTÈME DE PRODUCTION DE DÉSINFECTANT POUR L'EAU COMPRENANT UN MODULE DE MAGNÉTISATION DE L'EAU

(43) Date of publication of application: 13.03.2024
(73) Proprietor: Alireza, Fadaee Outan, 6342 GB Hoensbroek (NL)
(72) Inventor: Alireza, Fadaee Outan, 6342 GB Hoensbroek (NL)
(74) Representative: Yavuzcan, Alev
(86) International application number: PCT/IB2021/055418
(87) International publication number: WO 2022/269308

(56) References cited:
- EP-B1- 0 672 021
- WO-A1-2018/223525
- CA-A- 1 170 621
- CA-C- 2 150 328
- JP-A- 2010 232 432
- JP-A- H0 796 173
- US-A- 4 935 133
- US-A- 5 348 050
- US-A- 5 378 362
- US-B1- 6 428 697

## Description

### TECHNICAL FIELD

The present disclosure generally relates to a water disinfectant production system.

### BACKGROUND

Exposing water molecules to a magnetic field may lead to changes in water in terms of nature and physical shape, such that hydrogen bond between water molecules may weaken under the influence of a magnetic field. Consequently, chemical and physical features of water may be improved by subjecting the water to the magnetic influence of at least one magnetic field with a certain arrangement. Such water which has been treated with magnetic fields may be referred to as a magnetized water. When water molecule is exposed to a magnetic field, the water molecule may undergo some changes in terms of physical shape, which may lead to an increase in the solubility and porousness of water. As used herein, porousness of water may refer to the ability of water for dispersion and penetration into other materials. Such increase in solubility may contribute to the dissolution of nutritious substances as well as water's penetration ability and penetration rate into nutritious substances in the cells of plants and animals.

U.S. Patent No. 6,428,697 B1 discloses a system for processing wastewater using magnetohydrodynamic treatment followed by electrolytic cell treatment to produce sodium hypochlorite. The system consists of a multi-chamber tank: an initial anaerobic chamber where organic matter is decomposed by anaerobic bacteria and particulates are partially filtered; a subsequent aerobic chamber where aerobic microbes on fixed or floating media further degrade organic residues and clarify the effluent; and a final chamber for sludge management and filtration, where settled solids are pumped out and a secondary filter polishes the treated water before discharge.

U.S. Patent No. US5009791 discloses a magnetic treatment unit that includes an elongated permanent magnet with six poles. The aforementioned magnet is covered by an inner casing of copper or another non-magnetic material which protects the magnet against attack by the water flowing through the unit. Two stream-lined covers are attached to the ends of the aforementioned magnet and casing. An outer, tubular casing of a magnetic material, such a steel, surrounds the magnet and the inner casing in concentric alignment forming an annular water duct between the two casings. The outer casing is fastened in two ends fitting by means of screw thread, these fittings serving for connecting the unit to an inlet and outlet pipe, respectively. An outer shell of copper or another non-magnetic material connects the two end fittings and protects the entire unit against mechanical damage, while being spaced apart from the outer magnetic casing and forming an air space there between.

WO 2015186176 A1 discloses a method and a device for the manufacturing of magnetized water. A disc-shaped rotator is connected to a motor via a rotation shaft. The rotator includes multiple permanent magnets fixed at a selected interval therewithin. Magnetized water may be produced by rotating the rotator at high speed using the rotation shaft that is connected to the motor and applying an alternating magnetic field on the water flowing through the device.

U.S. patent No. US6773602 discloses a method for production of magnetized water wherein water containers have two coils around and with the help of cooling structure, water inside container is constantly cooled. The transmitted wave form can affect the quality of structural changes in magnetized water.

US 2009/0206020 A1 discloses a device that may include a chamber for placing a container of purified water, where the chamber may be wound with coils of wire with a predetermined number of rounds. The disclosed device may further include a means of supplying power to convert originally supplied alternating current of electricity into pulsating direct current signals and impress them on the coils for induction of a pulsating magnetic field to the chamber, a means of cooling the chamber, a means of sensing changes in temperature of the coils, a means of measuring time to gauge the time of magnetization of the purified water, and a means of control to stop input of direct current pulsating signals when the time spent on magnetizing has reached a preset time.

CN02131922 discloses a structure for the production of magnetized water in which a hidden spiral in the pipe enables the magnets to locate themselves with opposite poles next to each other and penetrate to the core of screw. In the meantime, water rotates around the core while passing through the device and this causes existing particles interact constantly with magnetic field and clusters or change to sole water molecules under ideal conditions. Other relevant disclosures are CN201770526U, CN101905915A, CN2082719U, GB1108308A, US20090065438A1, KR20040057857A, and US4935133A.

The arrangement of magnetic fields through which water is to flow has a significant effect on chemical and physical features of water. Consequently, finding an arrangement that may allow for a better improvement of chemical and physical features of water is crucial in the field.

### SUMMARY OF DISCLOSURE

This summary is intended to provide an overview of the subject matter of the present disclosure and is not intended to identify essential elements or key elements of the subject matter, nor is it intended to be used to determine the scope of the claimed implementations. The proper scope of the present disclosure may be ascertained from the claims set forth below in view of the detailed description and the drawings.

According to one or more exemplary embodiments, the present disclosure is directed to a water disinfectant production system. The system includes a first water magnetization module for obtaining magnetized water from a stream of water by exposing the stream of water to magnetic fields, a water disinfectant production module for obtaining a disinfectant solution from the magnetized water, and a second water magnetization module for magnetizing a disinfectant solution. The invention is set out in the appended set of claims.

### BRIEF DESCRIPTION OF FIGURES:

The novel features which are believed to be characteristic of the present disclosure, as to its structure, organization, use and method of operation, together with further objectives and advantages thereof, will be better understood from the following drawings in which a presently preferred embodiment of the present disclosure will now be illustrated by way of example. It is expressly understood, however, that the drawings are for illustration and description only and are not intended as a definition of the limits of the present disclosure. Embodiments of the present disclosure will now be described by way of example in association with the accompanying drawings in which:
**FIG. 1A** illustrates a system for magnetizing water utilizing ring magnets, consistent with one or more exemplary embodiments of the present disclosure;
**FIG. 1B** illustrates a schematic sectional front view of a system for magnetizing water utilizing ring magnets, consistent with one or more exemplary embodiments of the present disclosure;
**FIG. 2** illustrates a schematic perspective view of an axially magnetized permanent magnet ring, consistent with one or more exemplary embodiments of the present disclosure;
**FIG. 3A** illustrates magnetic field lines generated by a plurality of axially magnetized permanent magnet rings with each pair of adjacent axially magnetized permanent magnet rings facing each other with faces having similar polarities, consistent with one or more exemplary embodiments of the present disclosure;
**FIG. 3B** illustrates magnetic field lines generated by a plurality of axially magnetized permanent magnet rings with each pair of adjacent axially magnetized permanent magnet rings facing each other with faces having opposite polarities, consistent with one or more exemplary embodiments of the present disclosure;
**FIG. 4A** illustrates a schematic sectional side view of a system for magnetizing water utilizing slab magnets, consistent with one or more exemplary embodiments of the present disclosure;
**FIG. 4B** illustrates a schematic sectional front view of a system for magnetizing water utilizing slab magnets, consistent with one or more exemplary embodiments of the present disclosure;
**FIG. 5A** illustrates a schematic sectional side view of a system for magnetizing water utilizing bar magnets, consistent with one or more exemplary embodiments of the present disclosure;
**FIG. 5B** illustrates a schematic sectional front view of a system for magnetizing water utilizing bar magnets, consistent with one or more exemplary embodiments of the present disclosure;
**FIG. 6** illustrates a schematic sectional side view of a system for magnetizing water utilizing at least one electromagnet, according to the invention, and
**FIG. 7** illustrates a flow diagram of a water disinfectant production system 70, according to the invention.

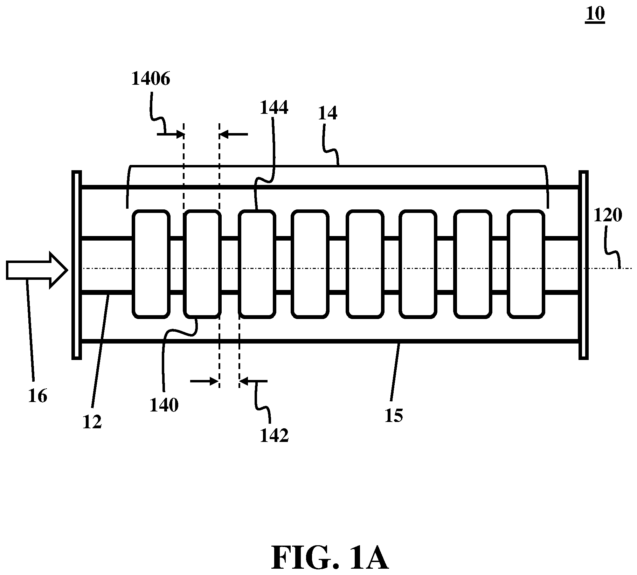

The exemplary embodiments of figures 1A, 1B, 2, 3A, 3B, 4A, 4B, 5A and 5B are present for illustration purposes only and are not part of the invention.

### DETAILED DESCRIPTION

The novel features which are believed to be characteristic of the present disclosure, as to its structure, organization, use and method of operation, together with further objectives and advantages thereof, will be better understood from the following discussion.

According to one or more exemplary embodiments, the present disclosure is directed to systems and methods for magnetizing water. An exemplary system for magnetizing water may include a non-magnetic conduit or pie, through which water may be pumped. An exemplary system may further include a magnetic fields generation mechanism that may be coupled with an exemplary non-magnetic conduit. An exemplary magnetic fields generation mechanism may be configured to apply at least one magnetic field to an exemplary stream of water flowing through an exemplary non-magnetic conduit. For example, an exemplary magnetic field generation mechanism may include at least one electromagnet coil wound around an exemplary non-magnetic conduit.

In an exemplary embodiment, such application of at least one magnetic field on an exemplary stream of water passing through an exemplary non-magnetic conduit of an exemplary system for producing magnetized water may change the properties of water by affecting hydrogen bonds of water molecules. Consequently, the produced magnetized water may have improved stability and solubility in comparison with normal water.

In an exemplary embodiment, magnetized water that may be produced by exemplary systems and methods may be utilized for cultivating organic products without using fertilizers. Due to more solubility of magnetized water and its combination with soil, minerals in soil are better absorbed by plant and this causes better resistance and growth of plant and need less fertilizer. Magnetized water in agriculture causes the liberation and increase of solubility of nutritious elements of soil. Generally, small percentage of added fertilizer is used by plant and the rest destroys the soil whereas all the fertilizer is consumed in the soil if magnetized water is used. Due to higher resistance and better growth of plant, more conservation in use of pesticides and agricultural toxins is possible. Furthermore, the issue of sediments in the pipelines of pressurized irrigation and heating systems may be addressed by utilizing magnetized water in these systems rather than normal water.

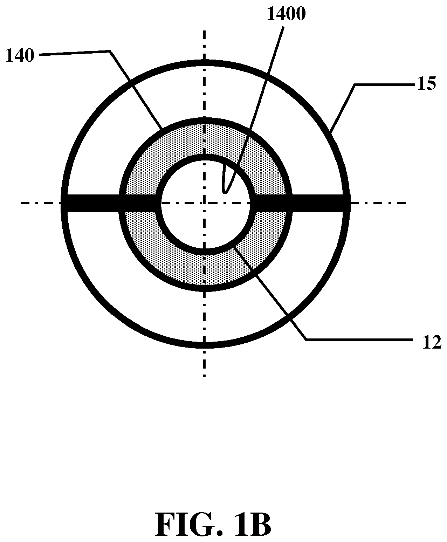

**FIG. 1A** illustrates a system **10** for magnetizing water utilizing ring magnets, consistent with one or more exemplary embodiments of the present disclosure. **FIG. 1B** illustrates a schematic sectional front view of system **10** for magnetizing water utilizing ring magnets, consistent with one or more exemplary embodiments of the present disclosure. Exemplary embodiments illustrated in **FIGs. 1A** and **1B** and their description are present for illustration purposes only and are not part of the invention.

In an exemplary embodiment, system **10** may include a non-magnetic conduit **12** and a plurality of axially magnetized permanent magnet rings **14** that may be mounted coaxially around non-magnetic conduit **12.** In an exemplary embodiment, plurality of axially magnetized permanent magnet rings **14** may be mounted along a length of non-magnetic conduit **12** with a predetermined longitudinal distance between each pair of adjacent axially magnetized permanent magnet rings of plurality of axially magnetized permanent magnet rings **14.** For example, axially magnetized permanent magnet ring **140** may be mounted at a predetermined longitudinal distance **142** from axially magnetized permanent magnet ring **144.** In an exemplary embodiment, plurality of axially magnetized permanent magnet rings **14** may be mounted on non-magnetic conduit **12** with an axis of symmetry of each axially magnetized permanent magnet ring of plurality of axially magnetized permanent magnet rings **14** being parallel with a longitudinal axis **120** of non-magnetic conduit **12.** In an exemplary embodiment, a central hole of each axially magnetized permanent magnet ring of plurality of axially magnetized permanent magnet rings **14** may encompass non-magnetic conduit **12.** For example, central hole **1400** of axially magnetized permanent magnet ring **140** may encompass non-magnetic conduit **12.** As used herein, central hole **1400** of axially magnetized permanent magnet ring **140** encompassing non-magnetic conduit **12** may refer to non-magnetic conduit **12** passing through central hole **1400.**

In an exemplary embodiment, system **10** may further include an elongated housing **15** that may be coaxially disposed around non-magnetic conduit **12.** In an exemplary embodiment, elongated housing **15** may extend along longitudinal axis **120** of non-magnetic conduit **12.** Elongated housing **15** may be coaxial with and encompassing plurality of axially magnetized permanent magnet rings **14** such that plurality of axially magnetized permanent magnet rings **14** may be disposed between elongated housing **15** and non-magnetic conduit **12.**

In an exemplary embodiment, feed water **16** may be transferred into system **10** via non-magnetic conduit **12.** Then, the stream of water passing through system **10** may be subjected to magnetic fields generated by plurality of axially magnetized permanent magnet rings **14.** After passing through the magnetic field or fields provided by plurality of axially magnetized permanent magnet rings **14,** the produced magnetized water may be fed into other systems or processes to be used as a solvent or other possible applications.

In an exemplary embodiment, the predetermined longitudinal distance between each pair of adjacent axially magnetized permanent magnet rings may be between 0.25 and 1 times the width of each axially magnetized permanent magnet ring. For example, predetermined longitudinal distance **142** between axially magnetized permanent magnet ring **140** and axially magnetized permanent magnet ring **144** may be between 0.25 and 1 times a width **1406** of axially magnetized permanent magnet ring **140.** In an exemplary embodiment, plurality of axially magnetized permanent magnet rings **14** may be structured similarly with similar widths.

In an exemplary embodiment, non-magnetic conduit **12** may include a non-magnetic pipe, through which water feed **16** may be pumped into system **10.** Water may be supplied from a pressurized source and may flow through system **10** to be magnetized.

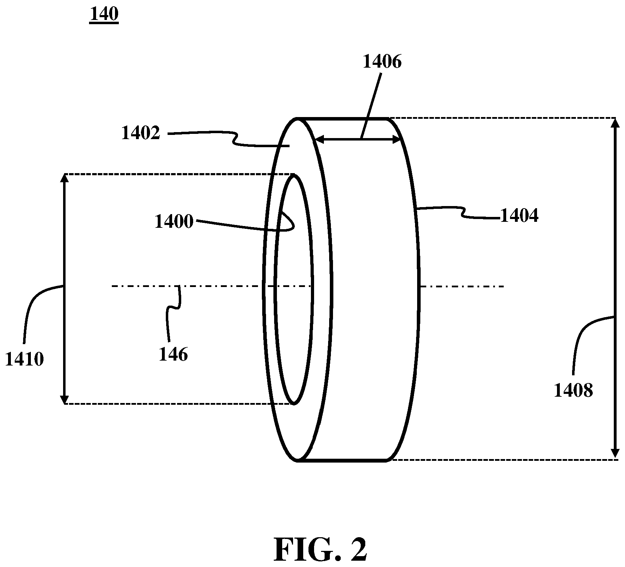

**FIG. 2** illustrates a schematic perspective view of axially magnetized permanent magnet ring **140,** consistent with one or more exemplary embodiments of the present disclosure. Exemplary embodiments illustrated in **FIG. 2** and their description are present for illustration purposes only and are not part of the invention. In an exemplary embodiment, each axially magnetized permanent magnet ring of plurality of axially magnetized permanent magnet rings **14** may include a first face with a first polarity and a second face with a second polarity, where the first face and the second face may be perpendicular to an axis of symmetry of each axially magnetized permanent magnet ring of plurality of axially magnetized permanent magnet rings **14.** For example, axially magnetized permanent magnet ring **140** may include a first face **1402** with a first polarity and a second face **1404** with a second polarity, where first face **1402** and second face **1404** may be perpendicular to axis of symmetry **146** of axially magnetized permanent magnet ring **140.** In an exemplary embodiment, the first polarity may be one of north (N) or south (S) and the second polarity may be one of N or S. As used herein, permanent magnet ring **140** being axially magnetized may refer to first face **1402** having a first polarity, for example N, and second face **1404** having an opposite polarity, for example S.

In an exemplary embodiment, each pair of adjacent axially magnetized permanent magnet rings of plurality of axially magnetized permanent magnet rings **14** may be facing each other with faces having opposite polarities. For example, axially magnetized permanent magnet ring **140** may face axially magnetized permanent magnet ring **144** with faces with opposite polarities, i.e., axially magnetized permanent magnet ring **140** may face axially magnetized permanent magnet ring **144** with a face of N polarity, while axially magnetized permanent magnet ring **144** faces axially magnetized permanent magnet ring **140** with a face of S polarity or vice versa.

In an exemplary embodiment, each pair of adjacent axially magnetized permanent magnet rings of plurality of axially magnetized permanent magnet rings **14** may be facing each other with faces having similar polarities. For example, axially magnetized permanent magnet ring **140** may face axially magnetized permanent magnet ring **144** with faces with similar polarities, i.e., axially magnetized permanent magnet ring **140** may face axially magnetized permanent magnet ring **144** with a face of N polarity, and axially magnetized permanent magnet ring **144** may also face axially magnetized permanent magnet ring **140** with a face of N polarity.

In an exemplary embodiment, a first portion of plurality of axially magnetized permanent magnet rings **14** may be configured such that each pair of adjacent axially magnetized permanent magnet rings of the first portion of plurality of axially magnetized permanent magnet rings **14** may be facing each other with faces having similar polarities. In an exemplary embodiment, a second portion of plurality of axially magnetized permanent magnet rings **14** may be configured such that each pair of adjacent axially magnetized permanent magnet rings of the second portion of plurality of axially magnetized permanent magnet rings **14** may be facing each other with faces having opposite polarities. In an exemplary embodiment, such arrangement may be vice versa, i.e. each pair of adj acent axially magnetized permanent magnet rings of the first portion of plurality of axially magnetized permanent magnet rings **14** may be facing each other with faces having opposite polarities while each pair of adjacent axially magnetized permanent magnet rings of the second portion of plurality of axially magnetized permanent magnet rings **14** may be facing each other with faces having similar polarities.

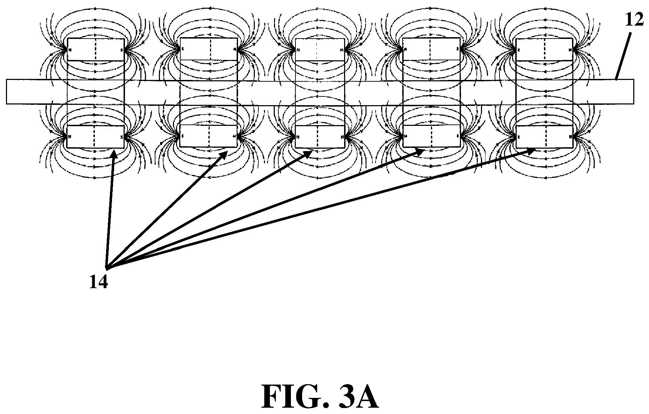

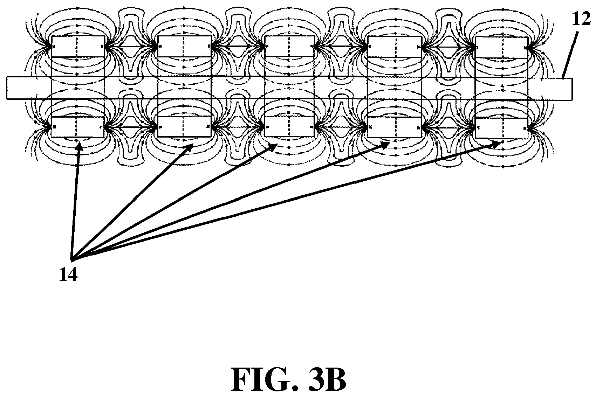

**FIG. 3A** illustrates magnetic field lines generated by plurality of axially magnetized permanent magnet rings **14** with each pair of adjacent axially magnetized permanent magnet rings facing each other with faces having similar polarities, consistent with one or more exemplary embodiments of the present disclosure. **FIG. 3B** illustrates magnetic field lines generated by plurality of axially magnetized permanent magnet rings **14** with each pair of adjacent axially magnetized permanent magnet rings facing each other with faces having opposite polarities, consistent with one or more exemplary embodiments of the present disclosure. Exemplary embodiments illustrated in **FIGs. 3A** and **3B** and their description are present for illustration purposes only and are not part of the invention.

In an exemplary embodiment, plurality of axially magnetized permanent magnet rings **14** may include a first axially magnetized permanent magnet ring such as axially magnetized permanent magnet ring **140** and a second axially magnetized permanent magnet ring such as axially magnetized permanent magnet ring **144** that may be positioned at a predetermined longitudinal distance such as predetermined longitudinal distance **142** away from the first axially magnetized permanent magnet ring. In an exemplary embodiment, a first face of the first axially magnetized permanent magnet ring with a first polarity (either S or N) may be positioned facing a second face of the second axially magnetized permanent magnet ring with a second polarity (either S or N). In an exemplary embodiment, the first polarity and the second polarity may be opposite polarities. In an exemplary embodiment, the first polarity and the second polarity may be similar polarities.

In an exemplary embodiment, a predetermined longitudinal distance between each pair of adj acent axially magnetized permanent magnet rings of plurality of axially magnetized permanent magnet rings **14** may be between 2 mm and 10 mm. For example, longitudinal distance **142** between axially magnetized permanent magnet ring **140** and axially magnetized permanent magnet ring **144** may be between 2 mm and 10 mm.

In an exemplary embodiment, a thickness of each axially magnetized permanent magnet ring of plurality of axially magnetized permanent magnet rings **14** may be between 5 mm and 50 mm. For example, a thickness **1406** of axially magnetized permanent magnet ring **140** may be between 5 mm and 50 mm.

In an exemplary embodiment, an outer diameter of each axially magnetized permanent magnet ring of plurality of axially magnetized permanent magnet rings **14** may be between 10 mm and 300 mm. For example, an outer diameter **1408** of axially magnetized permanent magnet ring **140** may be between 10 mm and 300 mm.

In an exemplary embodiment, an inner diameter of each axially magnetized permanent magnet ring of plurality of axially magnetized permanent magnet rings **14** may be equal to an outer diameter **122** of non-magnetic conduit **12.** For example, an inner diameter **1410** of axially magnetized permanent magnet ring **140** may be equal to an outer diameter **122** of non-magnetic conduit **12.** In an exemplary embodiment, inner diameter **1410** of axially magnetized permanent magnet ring **140** may be in a range of 5 mm to 150 mm.

According to one or more exemplary embodiments, the present disclosure is further directed to a system for magnetizing water, in which magnetic field generation mechanism may include a plurality of slab magnets disposed between each side of a non-magnetic conduit and an outer housing or conduit encompassing the plurality of slab magnets. Exemplary slab magnets may be arranged at both sides of an exemplary non-magnetic conduit along a longitudinal axis of an exemplary non-magnetic conduit. In an exemplary embodiment, exemplary slab magnets may be arranged around an exemplary non-magnetic conduit, such that a pair of slab magnets of exemplary slab magnets may be aligned at opposite sides of an exemplary non-magnetic conduit along an axis perpendicular to an exemplary longitudinal axis of an exemplary non-magnetic conduit. In an exemplary embodiment, exemplary slab magnets may be arranged such that every other pair of slab magnets mounted on opposite sides of an exemplary non-magnetic conduit may face each other with opposite poles and other remaining pair of slab magnets may face each other with similar poles, which will be discussed.

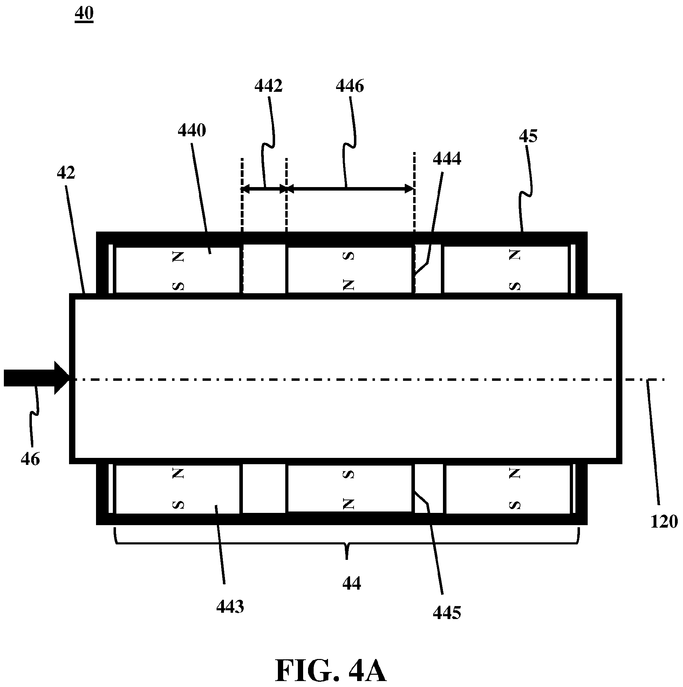

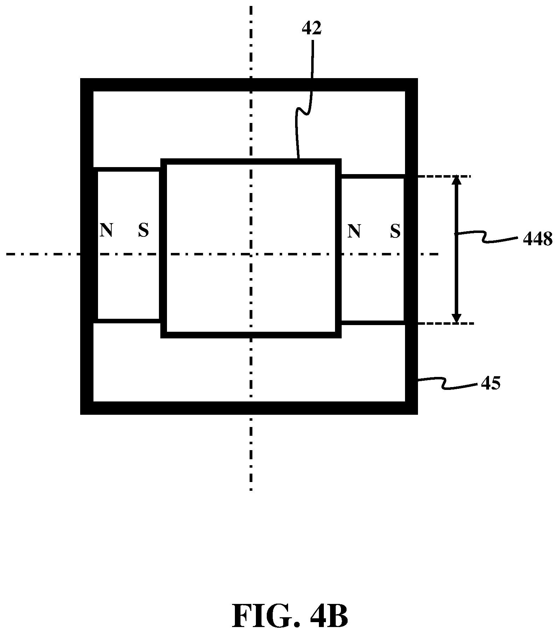

**FIG. 4A** illustrates a schematic sectional side view of a system **40** for magnetizing water utilizing slab magnets, consistent with one or more exemplary embodiments of the present disclosure. **FIG. 4B** illustrates a schematic sectional front view of system **40** for magnetizing water utilizing slab magnets, consistent with one or more exemplary embodiments of the present disclosure. Exemplary embodiments illustrated in **FIGs. 4A** and **4B** and their description are present for illustration purposes only and are not part of the invention.

In an exemplary embodiment, system **40** may be configured similar to system **10** to apply magnetic fields on a water stream. In an exemplary embodiment, system **40** may include a non-magnetic conduit **42** similar to non-magnetic conduit **12,** which may be configured for allowing a water stream to pass through non-magnetic conduit **42.** In an exemplary embodiment, system **40** may further include a plurality of slab magnets **44** that may be mounted on both sides of non-magnetic conduit **42.** In an exemplary embodiment, plurality of slab magnets **44** may be mounted along a length of non-magnetic conduit **42** with a predetermined longitudinal distance between each pair of adjacent slab magnets of plurality of slab magnets **44.** For example, slab magnet **440** may be mounted at a predetermined longitudinal distance **442** from slab magnet **444.** In an exemplary embodiment, predetermined longitudinal distance **442** may be between a quarter of a width **448** of each slab magnet and a half of width **448.** In an exemplary embodiment, each slab magnet may have a predetermined length **446,** which may depend at least in part on a total length of non-magnetic conduit **42.**

In an exemplary embodiment, each pair of slab magnets on either sides of non-magnetic conduit **42** may be aligned along an axis perpendicular to longitudinal axis **420** of non-magnetic conduit **42.** For example, slab magnet **440** may be aligned with slab magnet **443** at opposite sides of non-magnetic conduit **42.** In an exemplary embodiment, opposite pairs of slab magnets may be polarized such that opposite poles may face towards non-magnetic conduit **42.** For example, north pole of slab magnet **440** may face non-magnetic conduit **42,** while south pole of slab magnet **443** may face non-magnetic conduit **42.** In an exemplary embodiment, next pair of adjacent slab magnets may be polarized oppositely. For example, in the example presented above, south pole of slab magnet **444** may face non-magnetic conduit **42,** while a north pole of slab magnet **445** may face non-magnetic conduit **42.** In an exemplary embodiment, such arrangement of slab magnets around non-magnetic conduit **42** may allow for application of magnetic fields on a water feed **46** pumped into and passing through system **40.**

In an exemplary embodiment, system **40** may further include an iron shield **45** that may be disposed around non-magnetic conduit **42.** In an exemplary embodiment, iron shield **45** may extend along longitudinal axis **420** of non-magnetic conduit **42.** Plurality of slab magnets **44** may be disposed between iron shield **45** and non-magnetic conduit **42.** Referring to **FIG. 4B****,** in an exemplary embodiment, iron shield **45** may have a square or rectangular cross-section that may concentrically be positioned around non-magnetic conduit **42,** which also may have a square or rectangular cross-section. As used herein, a longitudinal axis of an object is an axis associated with the longest dimension of that object.

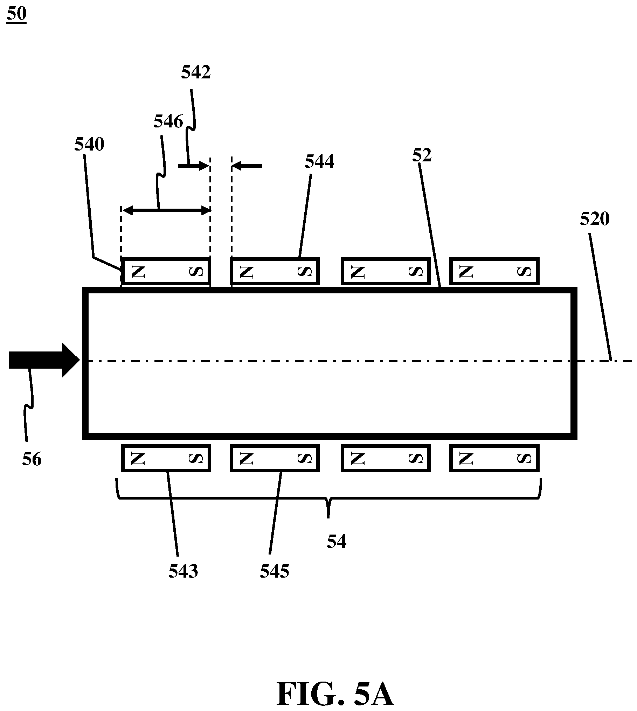

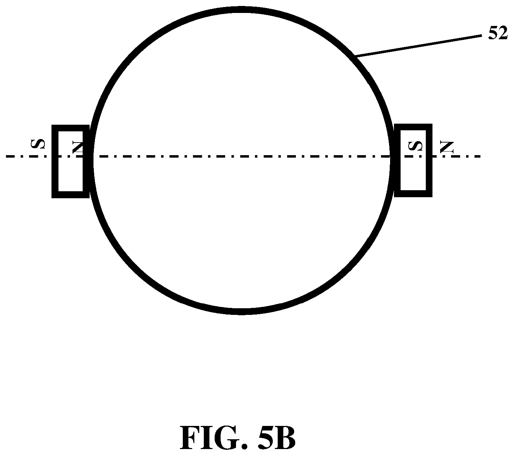

**FIG. 5A** illustrates a schematic sectional side view of a system **50** for magnetizing water utilizing bar magnets, consistent with one or more exemplary embodiments of the present disclosure. **FIG. 5B** illustrates a schematic sectional front view of system **50** for magnetizing water utilizing bar magnets, consistent with one or more exemplary embodiments of the present disclosure. Exemplary embodiments illustrated in **FIGs. 5A** and **5B** and their description are present for illustration purposes only and are not part of the invention.

In an exemplary embodiment, system **50** may be configured similar to system **10** and system **40** to apply magnetic fields on a water feed **56.** In an exemplary embodiment, system **50** may include a non-magnetic conduit **52** similar to non-magnetic conduit **12,** which may be configured for allowing a water stream to pass through system **50.** In an exemplary embodiment, system **50** may further include a plurality of magnet bars **54** that may be mounted on both sides of non-magnetic conduit **52.** In an exemplary embodiment, plurality of magnet bars **54** may be mounted along a length of non-magnetic conduit **52** with a predetermined longitudinal distance between each pair of adj acent magnet bars of plurality of magnet bars **54.** For example, magnet bar **540** may be mounted at a predetermined longitudinal distance **542** from magnet bar **544.** In an exemplary embodiment, each magnet bar of plurality of magnet bars **54** may have a predetermined length **546** (referred to herein with symbol Lₘ) that may be between 20 mm and 200 mm. In an exemplary embodiment, the predetermined longitudinal distance between each pair of adj acent magnet bars of plurality of magnet bars **54** may be between Lₘ/8 and Lₘ/4.

In an exemplary embodiment, each pair of magnet bars at either sides of non-magnetic conduit **52** may be aligned along an axis perpendicular to longitudinal axis **520** of non-magnetic conduit **52.** For example, magnet bar **540** may be aligned with magnet bar **543** at opposite sides of non-magnetic conduit **52.** In an exemplary embodiment, plurality of magnet bars **54** may be polarized as illustrated in **FIGs. 5A** and **5B****.** In an exemplary embodiment, such arrangement of magnet bars around non-magnetic conduit **52** may allow for application of magnetic fields on water feed **56** that may flow through system **50.**

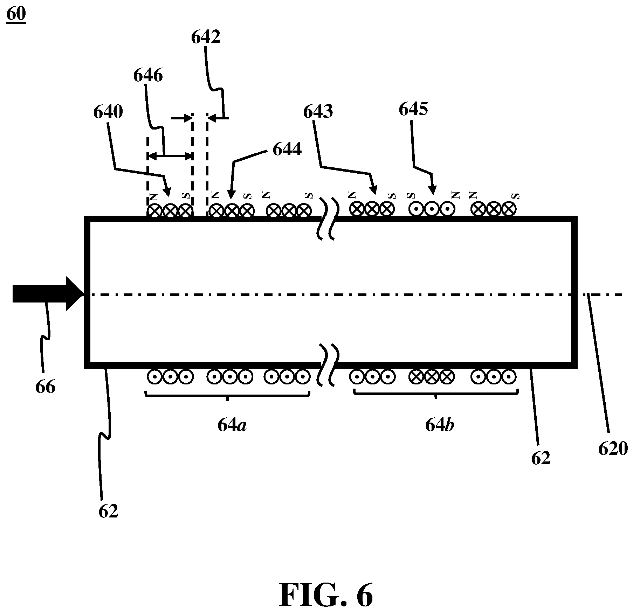

**FIG. 6** illustrates a schematic sectional side view of a system **60** for magnetizing water utilizing at least one electromagnet, according to the invention. In an exemplary embodiment, system **60** i configured similar to systems **10, 40,** and **50** to apply magnetic fields on a water feed **66.** In an exemplary embodiment, system **60** includes a non-magnetic conduit **62** similar to non-magnetic conduit **12,** which is configured for allowing water feed **66** to flow through system **60.** In an exemplary embodiment, system **60** further includes a plurality of electromagnets (**64*a***, **64b)** that are wound around non-magnetic conduit **62.** Specifically, plurality of electromagnets (**64*a***, **64*b*)** are wound around an outer surface of non-magnetic conduit **62.** As illustrated in **FIG. 6****,** conductive wires wound around non-magnetic conduit **62** are designated by small circles with dots and crosses inside the small circles. As used herein, the dots and crosses are indicative of the current direction. Specifically, circles with dots designate a current direction towards the view and circles with cross designate a current direction away from view. Polarities for each coil of conductive wire are further designated by N's for north poles and S's for south poles. The polarity of the electromagnet formed by each coil is determined by the current direction within that coil. For example, for coil **640** which may form an electromagnet, when viewed from the side, the current is counterclockwise and therefore the north pole (N) is at the left and the south pole (S) is at the right.

In an exemplary embodiment, plurality of electromagnets (**64*a***, **64*b*)** are mounted along a length of non-magnetic conduit **62** with a predetermined longitudinal distance between each pair of adjacent electromagnet coils of plurality of electromagnets (**64*a***, **64*b*)*.*** For example, electromagnet coil **640** are mounted at a predetermined longitudinal distance **642** from electromagnet coil **644.** In an exemplary embodiment, each electromagnet coil of plurality of electromagnets (**64*a***, **64*b*)** has a predetermined length (Lₘ) **646** that is between 20 mm and 200 mm. In an exemplary embodiment, the predetermined longitudinal distance between each pair of adjacent electromagnet coils of plurality of electromagnets (**64*a***, **64*b*)** is between Lₘ/8 and Lₘ/4.

In an exemplary embodiment, a first plurality of electromagnets **64*a*** are configured such that each pair of adj acent electromagnet coils of first plurality of electromagnets **64*a*** are facing each other with sides having opposite polarities. For example, electromagnetic coil **640** are facing electromagnetic coil **644** with opposite S and N polarities. In an exemplary embodiment, a second plurality of electromagnets **64*b*** are configured such that each pair of adjacent electromagnet coils of second plurality of electromagnets **64*b*** are facing each other with sides having similar polarities. For example, electromagnetic coil **643** faces electromagnetic coil **645** with similar S poles.

In an exemplary embodiment, such arrangement i vice versa, i.e. each pair of adjacent electromagnet coils of first plurality of electromagnets **64*a*** are facing each other with sides having similar polarities. In an exemplary embodiment, a second plurality of electromagnets **64*b*** are configured such that each pair of adjacent electromagnet coils of second plurality of electromagnets **64*b*** are facing each other with sides having opposite polarities. However, for the sake of simplicity only one arrangement is discussed here.

As mentioned before, the produced magnetized water may have a wide range of applications. What follows is a description of an embodiment of a system for utilizing the produced magnetized water for producing a water disinfectant solution. It should be understood that the described systems and methods are just one example of how magnetized water may be utilized in different systems and different synthesis methods and improve them in a considerable fashion.

According to one or more exemplary embodiments, the present disclosure is further directed to exemplary embodiments of an exemplary water disinfectant solution production system that includes a water magnetization module and a water disinfectant production module. An exemplary water magnetization module first magnetizes water and then magnetized water enters an exemplary water disinfectant production module. An exemplary water disinfection production module includes an electrolysis reactor that produces a disinfectant in situ. In an exemplary embodiment, magnetizing water before feeding the water into an exemplary water disinfectant production module may have benefits that may include but are not limited to increasing the solubility of salt in water which may lead to an increase in the efficiency of water disinfectant production in an exemplary water disinfectant production module.

In an exemplary embodiment, such coupling of an exemplary water magnetization module and an exemplary water disinfection production module may allow for increasing the disinfection capability of water by increasing its solubility at a constant amount of disinfectant. In other words, the concentration of the disinfectant may be significantly decrease while its effectiveness may be maintained.

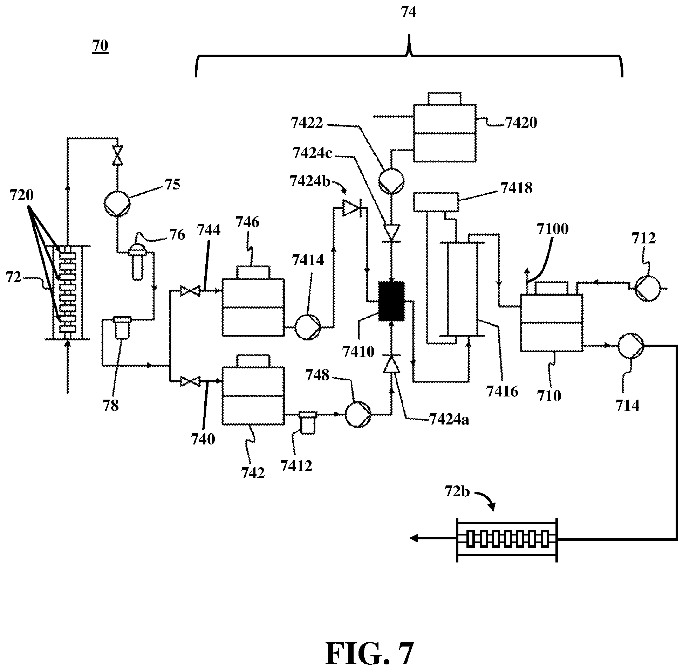

**FIG. 7** illustrates a flow diagram of a water disinfectant production system 70, according to the invention. In an exemplary embodiment, water first passes through an exemplary water magnetization module **72,** where water is magnetized by being exposed to magnetic fields produced by a series of electromagnets **(720).** Water magnetization may weaken hydrogen bonds in water molecules and as a result may increase solubility of salt in water. In an exemplary embodiment, magnetized water then enters a water disinfectant production module **74** after passing through a resin softener **76** and a filter **78,** which may either be a sand filter or a poly propylene cartridge filter. In an exemplary embodiment, resin softener **76** may include a cationic water softener. In an exemplary embodiment, magnetized water may be pumped utilizing a first booster pump **75** into water disinfectant production module **74.**

In an exemplary embodiment, as magnetized water enters water disinfectant production module **74,** a first portion **740** of the magnetized water is injected into a brine tank **742** and a second portion **744** of magnetized water enters a soft water tank **746.** In an exemplary embodiment, brine tank **742** includes NaCl, where first portion **740** of magnetized water is mixed with NaCl to obtain a saturated brine solution. As-produced saturated brine solution is pumped by a metering pump **748** into a mixing chamber **7410** after passing through a brine filter **7412.** In an exemplary embodiment, second portion **744** of magnetized water may be pumped by a soft water pump **7414** into mixing chamber **7410,** where soft magnetized water is mixed with saturated brine solution and then is fed into an electrolysis reactor **7416.**

In an exemplary embodiment, electrolysis reactor **7416** includes a cylindrical or cubic chamber, in which cathode and anode electrodes as a bipolar or monopolar unit or a combination of both are used in a parallel fashion for performing electrolysis. In an exemplary embodiment, anode and cathode electrodes may be made of titanium with or without a cover. In an exemplary embodiment, anode and cathode electrodes may be made of carbon or steel. In an exemplary embodiment, anode and cathode electrodes of electrolysis reactor **7416** are connected to at least one power supply **7418,** where the necessary electric voltage for the electrolysis of brine solution is provided by at least one power supply **7418.** Existing salt in water may turn into hypochlorite or hydrogen anions after passing through the electric field and hydrogen gets released as a gas and finally disinfectant solution may be produced. In fact, electrolysis of water minerals including NaCl may take place when the saturated brine solution passes through electrolysis reactor **7416** and as a result disinfectant substance including NaOCl, HOCl, H₂O₂, ClO₂, soluble ozone and oxygen may be produced. These substances accelerate and strengthen the disinfection procedure. pH of the solution in outlet is neutral. Density of the produced disinfectant solution is between 50 to 5000 milligrams per liter.

In an exemplary embodiment, mixing chamber **7410** may be utilized for controlling the pressure and metering of softened water pumped from soft water tank **746** and saturated brine solution pumped from brine tank **742.** Soft water and saturated brine solution enter mixing chamber **7410** before entering electrolysis reactor **7416** and the distribution of salt ions in water volume becomes homogeneous due to whirlpool movements within mixing chamber **7410.** In case of necessity, any additives or other necessary substances can be injected into mixing chamber **7410** through an additive tank **7420** with the help of an additive metering pump **7422.** All piping and fluid communication lines between an exemplary tank (either one of soft water tank **746,** brine tank **742,** or additive tank **7420)** and mixing chamber **7410** may be intercepted by one-way valves, such as valves **7424a-c** so as to prevent fluids to flow back from mixing chamber **7410.** Outlet water from electrolysis reactor **7416** enters a disinfectant solution reservoir tank **710** and hydrogen gas is evacuated through a vent **7100.** In an exemplary embodiment, a blower **712** is utilized for injecting air into reservoir tank **710** to accelerate hydrogen evacuation through vent **7100.**

In an exemplary embodiment, water disinfectant production system **70** further includes a second water magnetization module **72b** that is structurally similar to water magnetization module **72.** In an exemplary embodiment, magnetized disinfectant solution from disinfectant solution reservoir tank **710** further passes through second water magnetization module **72b** and is further subjected to magnetic fields before being pumped back into disinfectant solution reservoir tank **710.**

For simplicity, only one embodiment of water magnetization module **72** and second water magnetization module **72b** are illustrated in **FIG. 7****.** The water magnetization module **72** and second water magnetization module **72b** are configured like system **60**.

In exemplary embodiments, benefits of utilizing water disinfectant production system **70** of exemplary embodiments of the present disclosure may include but are not limited to leaving free active chlorine in long water networks, removal of taste stink from water, high durability, reduction in using disinfectant substance due to its strong impact, fast disinfection, removal of many resistant microorganism to disinfectants including cryptosporidium, reduction of production of Trihalomethanes and hollow Acetic acid at disinfecting surface water containing minerals, cheap accessible raw material, greater safety while production, maintenance and consumption, production of disinfecting magnetized water without chemical substances, simultaneous destroying of biofilm from chambers' casing and water transmission networks organically without chemical substances, and no need to poisonous substance for the disinfection due to salt electrolysis method.

According to one or more exemplary embodiments of the present disclosure, an exemplary water disinfectant production system may have applications in poultry farms, livestock farms, animal husbandry farms, fish farms, small and big industries consuming magnetized water for sterilizing, and disinfecting flower and seed conservatories, and bushes, tree, vegetables and fruit conservatories. It is also useful in disinfecting drinking water, pool water, aqua parks, sewage treatment, industrial water including cooling towers, desalination, surface disinfection, clothes, dishes and etc.

The embodiments have been described above with the aid of functional building blocks illustrating the implementation of specified functions and relationships thereof. The boundaries of these functional building blocks have been arbitrarily defined herein for the convenience of the description. Alternate boundaries can be defined so long as the specified functions and relationships thereof are appropriately performed.

The foregoing description of the specific embodiments will so fully reveal the general nature of the disclosure that others can, by applying knowledge within the skill of the art, readily modify and/or adapt for various applications such specific embodiments, without undue experimentation, without departing from the general concept of the present disclosure. Therefore, such adaptations and modifications are intended to be within the meaning and range of equivalents of the disclosed embodiments, based on the teaching and guidance presented herein. It is to be understood that the phraseology or terminology herein is for description and not of limitation, such that the terminology or phraseology of the present specification is to be interpreted by the skilled artisan in light of the teachings and guidance.

The breadth and scope of the present disclosure should not be limited by any of the above-described exemplary embodiments but should be defined only in accordance with the following claims.

Throughout this specification and the claims which follow, unless the context requires otherwise, the word "comprise", and variations such as "comprises" or "comprising", will be understood to imply the inclusion of a stated integer or step or group of integers or steps but not to the exclusion of any other integer or step or group of integers or steps.

Moreover, the word "substantially" when used with an adjective or adverb is intended to enhance the scope of the particular characteristic; e.g., substantially planar is intended to mean planar, nearly planar and/or exhibiting characteristics associated with a planar element. Further use of relative terms such as "vertical", "horizontal", "up", "down", and "side-to-side" are used in a relative sense to the normal orientation of the apparatus.

## Claims

1. A water disinfectant production system (70), comprising:
a water magnetization module (72) for obtaining magnetized water from a stream of water by exposing the stream of water to magnetic fields;
a water disinfectant production module (74) coupled to the water magnetization module (72) for obtaining a disinfectant solution from the magnetized water, the water disinfectant production module (74) comprising:
a brine tank (742) for receiving a first portion (740) of the magnetized water and producing a saturated brine solution by mixing the magnetized water with NaCl;
a soft water tank (746) for receiving a second portion (744) of the magnetized water and producing soft magnetized water from the second portion (744);
a mixing chamber (7410) connected to the brine tank (742) and the soft water tank (746) for mixing the saturated brine solution with the soft magnetized water;
a metering pump (748) connected between the brine tank (742) and the mixing chamber (7410) for pumping the saturated brine solution to the mixing chamber (7410);
a brine filter (7412) connected between the brine tank (742) and the metering pump (748) for passing the saturated brine solution from the brine tank (742) to the metering pump (748);
a soft water pump (7414) connected between the soft water tank (746) and the mixing chamber (7410) for pumping the soft magnetized water to the mixing chamber (7410);
an electrolysis reactor (7416) connected to the mixing chamber (7410) for producing a disinfectant solution from the saturated brine solution and the soft magnetized water, the electrolysis reactor (7416) comprising anode and cathode electrodes placed in a chamber for performing electrolysis on the saturated brine solution and the soft magnetized water in a parallel fashion;
at least one power supply (7418) connected to the anode and cathode electrodes for providing electric voltage to the electrolysis reactor (7416);
a disinfectant solution reservoir tank (710) connected to the electrolysis reactor (7416) for receiving outlet water from the electrolysis reactor (7416), the disinfectant solution reservoir tank (710) comprising a vent (7100) for evacuating a hydrogen gas released responsive to the electrolysis; and
a blower (712) connected to the disinfectant solution reservoir tank (710) for accelerating the evacuation of the hydrogen gas by injecting air into the disinfectant solution reservoir tank (710); and
a second water magnetization module (72b) connected to the disinfectant solution reservoir tank (710) for magnetizing a disinfectant solution of the disinfectant solution reservoir tank (710);
wherein each of the water magnetization module (72) and the second water magnetization module (72b) comprises:
a non-magnetic conduit (12) configured to allow a feed water (16) to flow therethrough; and
a magnetic fields generation mechanism comprising a plurality of magnets arranged around the non-magnetic conduit (12), the magnetic fields generation mechanism configured to subject the feed water (16) to magnetic fields, the plurality of magnets comprising:
a first plurality of electromagnets (64a) mounted along a length of the non-magnetic conduit (12) with a predetermined longitudinal distance (642) between each pair of adjacent coils of the first plurality of electromagnets (64a), the predetermined longitudinal distance (642) being between Lₘ/8 and Lₘ/4 where Lₘ is a length of each electromagnet coil of the plurality of electromagnets, each pair of adjacent coils of the first plurality of electromagnets (64a) facing each other with sides having opposite polarities; and
a second plurality of electromagnets (64b) mounted along the length of the non-magnetic conduit (12) with the predetermined longitudinal distance (642) between each pair of adjacent coils of the second plurality of electromagnets (64b), each pair of adjacent coils of the second plurality of electromagnets (64b) facing each other with sides having similar polarities.

2. The water disinfectant production system (70) of claim **1,** further comprising a booster pump (75) connected between the water magnetization module (72) and the water disinfectant production module (74) for pumping the magnetized water into the water disinfectant production module (74).

3. The water disinfectant production system (70) of claim 2, further comprising a soft water pump (7414) connected between the soft water tank (746) and the mixing chamber (7410) for pumping the soft magnetized water into the mixing chamber (7410).

4. The water disinfectant production system (70) of claim 3, further comprising:
an additive tank (7420) for containing additives; and
an additive metering pump (7422) connected between the additive tank (7420) and the mixing chamber (7410) for injecting the additives into the mixing chamber (7410).

5. The water disinfectant production system (70) of claim 4, further comprising a plurality of one-way valves for preventing fluids from flowing back from the mixing chamber (7410), the plurality of one-way valves comprising:
a first valve (7424a) connected between the brine tank (742) and the mixing chamber (7410);
a second valve (7424b) connected between the soft water tank (746) and the mixing chamber (7410); and
a third valve (7424c) connected between the additive tank (7420) and the mixing chamber (7410).

## Patentansprüche

1. Wasserdesinfektionsmittel-Herstellungssystem (70), umfassend:
ein Wassermagnetisierungsmodul (72), das dazu dient, magnetisiertes Wasser aus einem Wasserstrom zu erhalten, indem der Wasserstrom Magnetfeldern ausgesetzt wird;
ein Wasserdesinfektionsmittel-Herstellungsmodul (74), das mit dem Wassermagnetisierungsmodul (72) gekoppelt ist, um aus dem magnetisierten Wasser eine Desinfektionslösung zu erhalten, wobei das Wasserdesinfektionsmittel-Herstellungsmodul (74) Folgendes umfasst:
einen Solebehälter (742), der dazu dient, einen ersten Anteil (740) des magnetisierten Wassers aufzunehmen und durch Mischen des magnetisierten Wassers mit NaCl eine gesättigte Solelösung herzustellen;
einen Weichwasserbehälter (746), der dazu dient, einen zweiten Anteil (744) des magnetisierten Wassers aufzunehmen und aus dem zweiten Anteil (744) magnetisiertes enthärtetes Wasser herzustellen;
eine Mischkammer (7410), die mit dem Solebehälter (742) und dem Weichwasserbehälter (746) verbunden ist, um die gesättigte Solelösung mit dem magnetisierten enthärteten Wasser zu mischen;
eine Dosierpumpe (748), die zwischen dem Solebehälter (742) und der Mischkammer (7410) angeschlossen ist, um die gesättigte Solelösung zur Mischkammer (7410) zu pumpen;
einen Solefilter (7412), der zwischen dem Solebehälter (742) und der Dosierpumpe (748) angeschlossen ist, um die gesättigte Solelösung vom Solebehälter (742) zur Dosierpumpe (748) durchzulassen;
eine Weichwasserpumpe (7414), die zwischen dem Weichwasserbehälter (746) und der Mischkammer (7410) angeschlossen ist, um das magnetisierte enthärtete Wasser zur Mischkammer (7410) zu pumpen;
einen Elektrolysereaktor (7416), der mit der Mischkammer (7410) verbunden ist, um aus der gesättigten Solelösung und dem magnetisierten enthärteten Wasser eine Desinfektionslösung herzustellen, wobei der Elektrolysereaktor (7416) Anoden- und Kathodenelektroden umfasst, die in einer Kammer angeordnet sind, um die gesättigte Solelösung und das magnetisierte enthärtete Wasser parallel zu elektrolysieren;
mindestens eine Stromversorgung (7418), die mit den Anoden- und Kathodenelektroden verbunden ist, um dem Elektrolysereaktor (7416) eine elektrische Spannung zuzuführen;
einen Desinfektionslösungs-Speicherbehälter (710), der mit dem Elektrolysereaktor (7416) verbunden ist, um aus dem Elektrolysereaktor (7416) austretendes Wasser aufzunehmen, wobei der Desinfektionslösungs-Speicherbehälter (710) eine Entlüftungsöffnung (7100) umfasst, um als Reaktion auf die Elektrolyse freigesetztes Wasserstoffgas abzuführen; und
ein Gebläse (712), das mit dem Desinfektionslösungs-Speicherbehälter (710) verbunden ist, um die Abführung des Wasserstoffgases zu beschleunigen, indem Luft in den Desinfektionslösungs-Speicherbehälter (710) eingeblasen wird; und
ein zweites Wassermagnetisierungsmodul (72b), das mit dem Desinfektionslösungs-Speicherbehälter (710) verbunden ist, um eine in dem Desinfektionslösungs-Speicherbehälter (710) enthaltene Desinfektionslösung zu magnetisieren;
wobei sowohl das Wassermagnetisierungsmodul (72) als auch das zweite Wassermagnetisierungsmodul (72b) Folgendes umfasst:
eine nichtmagnetische Leitung (12), die dazu eingerichtet ist, einen Speisewasserstrom (16) hindurchströmen zu lassen; und
einen Magnetfelderzeugungsmechanismus, der mehrere um die nichtmagnetische Leitung (12) angeordnete Magnete umfasst, wobei der Magnetfelderzeugungsmechanismus dazu eingerichtet ist, den Speisewasserstrom (16) Magnetfeldern auszusetzen, wobei die mehreren Magnete Folgendes umfassen:
eine erste Mehrzahl von Elektromagneten (64a), die entlang einer Länge der nichtmagnetischen Leitung (12) montiert sind, wobei zwischen jedem Paar benachbarter Spulen der ersten Mehrzahl von Elektromagneten (64a) ein vorbestimmter Längsabstand (642) besteht, wobei der vorbestimmte Längsabstand (642) zwischen Lm/8 und Lm/4 liegt, wobei Lm eine Länge jeder Elektromagnetspule der Mehrzahl von Elektromagneten ist, und wobei sich jedes Paar benachbarter Spulen der ersten Mehrzahl von Elektromagneten (64a) mit Seiten gegenüberliegt, die entgegengesetzte Polaritäten aufweisen; und
eine zweite Mehrzahl von Elektromagneten (64b), die entlang der Länge der nichtmagnetischen Leitung (12) montiert sind, wobei zwischen jedem Paar benachbarter Spulen der zweiten Mehrzahl von Elektromagneten (64b) der vorbestimmte Längsabstand (642) besteht und sich jedes Paar benachbarter Spulen der zweiten Mehrzahl von Elektromagneten (64b) mit Seiten gegenüberliegt, die gleichartige Polaritäten aufweisen.

2. Wasserdesinfektionsmittel-Herstellungssystem (70) nach Anspruch 1, ferner umfassend eine Druckerhöhungspumpe (75), die zwischen dem Wassermagnetisierungsmodul (72) und dem Wasserdesinfektionsmittel-Herstellungsmodul (74) angeschlossen ist, um das magnetisierte Wasser in das Wasserdesinfektionsmittel-Herstellungsmodul (74) zu pumpen.

3. Wasserdesinfektionsmittel-Herstellungssystem (70) nach Anspruch 2, ferner umfassend eine Weichwasserpumpe (7414), die zwischen dem Weichwasserbehälter (746) und der Mischkammer (7410) angeschlossen ist, um das magnetisierte enthärtete Wasser in die Mischkammer (7410) zu pumpen.

4. Wasserdesinfektionsmittel-Herstellungssystem (70) nach Anspruch 3, ferner umfassend:
einen Additivbehälter (7420) zur Aufnahme von Additiven; und
eine Additiv-Dosierpumpe (7422), die zwischen dem Additivbehälter (7420) und der Mischkammer (7410) angeschlossen ist, um die Additive in die Mischkammer (7410) einzuspritzen.

5. Wasserdesinfektionsmittel-Herstellungssystem (70) nach Anspruch 4, ferner umfassend mehrere Rückschlagventile, die dazu dienen, einen Rückfluss von Fluiden aus der Mischkammer (7410) zu verhindern, wobei die mehreren Rückschlagventile Folgendes umfassen:
ein erstes Ventil (7424a), das zwischen dem Solebehälter (742) und der Mischkammer (7410) angeschlossen ist;
ein zweites Ventil (7424b), das zwischen dem Weichwasserbehälter (746) und der Mischkammer (7410) angeschlossen ist; und
ein drittes Ventil (7424c), das zwischen dem Additivbehälter (7420) und der Mischkammer (7410) angeschlossen ist.

## Revendications

1. Système de production d'un désinfectant pour l'eau (70), comprenant :
un module de magnétisation de l'eau (72) destiné à obtenir de l'eau magnétisée à partir d'un flux d'eau en exposant le flux d'eau à des champs magnétiques ;
un module de production de désinfectant pour l'eau (74), couplé au module de magnétisation de l'eau (72) afin d'obtenir une solution désinfectante à partir de l'eau magnétisée, le module de production de désinfectant pour l'eau (74) comprenant :
un réservoir de saumure (742) destiné à recevoir une première partie (740) de l'eau magnétisée et à produire une solution de saumure saturée en mélangeant l'eau magnétisée avec du NaCl ;
un réservoir d'eau adoucie (746) destiné à recevoir une deuxième partie (744) de l'eau magnétisée et à produire de l'eau adoucie magnétisée à partir de la deuxième partie (744) ;
une chambre de mélange (7410) reliée au réservoir de saumure (742) et au réservoir d'eau adoucie (746) afin de mélanger la solution de saumure saturée avec l'eau adoucie magnétisée ;
une pompe doseuse (748) raccordée entre le réservoir de saumure (742) et la chambre de mélange (7410) afin de pomper la solution de saumure saturée vers la chambre de mélange (7410) ;
un filtre à saumure (7412) raccordé entre le réservoir de saumure (742) et la pompe doseuse (748) afin de laisser passer la solution de saumure saturée du réservoir de saumure (742) vers la pompe doseuse (748) ;
une pompe d'eau adoucie (7414) raccordée entre le réservoir d'eau adoucie (746) et la chambre de mélange (7410) afin de pomper l'eau adoucie magnétisée vers la chambre de mélange (7410) ;
un réacteur d'électrolyse (7416) relié à la chambre de mélange (7410) afin de produire une solution désinfectante à partir de la solution de saumure saturée et de l'eau adoucie magnétisée, le réacteur d'électrolyse (7416) comprenant des électrodes d'anode et de cathode placées dans une chambre pour effectuer simultanément l'électrolyse de la solution de saumure saturée et de l'eau adoucie magnétisée ;
au moins une alimentation électrique (7418) raccordée aux électrodes d'anode et de cathode afin de fournir une tension électrique au réacteur d'électrolyse (7416) ;
un réservoir de stockage de solution désinfectante (710) relié au réacteur d'électrolyse (7416) afin de recevoir l'eau en sortie du réacteur d'électrolyse (7416), le réservoir de stockage de solution désinfectante (710) comprenant un évent (7100) destiné à évacuer l'hydrogène gazeux libéré en réponse à l'électrolyse ; et
un ventilateur (712) relié au réservoir de stockage de solution désinfectante (710) afin d'accélérer l'évacuation de l'hydrogène gazeux en injectant de l'air dans le réservoir de stockage de solution désinfectante (710) ; et
un deuxième module de magnétisation de l'eau (72b) relié au réservoir de stockage de solution désinfectante (710) afin de magnétiser une solution désinfectante contenue dans le réservoir de stockage de solution désinfectante (710) ;
dans lequel chacun du module de magnétisation de l'eau (72) et du deuxième module de magnétisation de l'eau (72b) comprend :
une conduite non magnétique (12) configurée pour permettre à un flux d'eau d'alimentation (16) de la traverser ; et
un mécanisme de génération de champs magnétiques comprenant une pluralité d'aimants disposés autour de la conduite non magnétique (12), le mécanisme de génération de champs magnétiques étant configuré pour soumettre le flux d'eau d'alimentation (16) à des champs magnétiques, la pluralité d'aimants comprenant :
une première pluralité d'électroaimants (64a) montés le long d'une longueur de la conduite non magnétique (12), avec une distance longitudinale prédéterminée (642) entre chaque paire de bobines adjacentes de la première pluralité d'électroaimants (64a), la distance longitudinale prédéterminée (642) étant comprise entre Lm/8 et Lm/4, où Lm est la longueur de chaque bobine d'électroaimant de la pluralité d'électroaimants, chaque paire de bobines adjacentes de la première pluralité d'électroaimants (64a) se faisant face par des côtés présentant des polarités opposées ; et
une deuxième pluralité d'électroaimants (64b) montés le long de la conduite non magnétique (12), avec la distance longitudinale prédéterminée (642) entre chaque paire de bobines adjacentes de la deuxième pluralité d'électroaimants (64b), chaque paire de bobines adjacentes de la deuxième pluralité d'électroaimants (64b) se faisant face par des côtés présentant des polarités similaires.

2. Système de production d'un désinfectant pour l'eau (70) selon la revendication 1, comprenant en outre une pompe de surpression (75) raccordée entre le module de magnétisation de l'eau (72) et le module de production de désinfectant pour l'eau (74) afin de pomper l'eau magnétisée dans le module de production de désinfectant pour l'eau (74).

3. Système de production d'un désinfectant pour l'eau (70) selon la revendication 2, comprenant en outre une pompe d'eau adoucie (7414) raccordée entre le réservoir d'eau adoucie (746) et la chambre de mélange (7410) afin de pomper l'eau adoucie magnétisée dans la chambre de mélange (7410).

4. Système de production d'un désinfectant pour l'eau (70) selon la revendication 3, comprenant en outre :
un réservoir d'additifs (7420) destiné à contenir des additifs ; et
une pompe doseuse d'additifs (7422) raccordée entre le réservoir d'additifs (7420) et la chambre de mélange (7410) afin d'injecter les additifs dans la chambre de mélange (7410).

5. Système de production d'un désinfectant pour l'eau (70) selon la revendication 4, comprenant en outre une pluralité de clapets anti-retour destinés à empêcher le reflux de fluides depuis la chambre de mélange (7410), la pluralité de clapets anti-retour comprenant :
un premier clapet (7424a) raccordé entre le réservoir de saumure (742) et la chambre de mélange (7410) ;
un deuxième clapet (7424b) raccordé entre le réservoir d'eau adoucie (746) et la chambre de mélange (7410) ; et
un troisième clapet (7424c) raccordé entre le réservoir d'additifs (7420) et la chambre de mélange (7410).
